# EUROPÄISCHE PATENTSCHRIFT

(11) **EP 2 883 435 B1**
(45) Veröffentlichungstag und Bekanntmachung des Hinweises auf die Patenterteilung: **27.07.2016**
(21) Anmeldenummer: 14189973.2
(22) Anmeldetag: 22.10.2014
(51) Int. Cl.: A01B 59/042, A01B 63/14

(54) **Landwirtschaftliches Fahrzeuggespann**
Agricultural vehicle combination
Train de véhicule agricole

(30) Priorität: 28.10.2013 DE 102013017890
(43) Veröffentlichungstag der Anmeldung: 17.06.2015
(73) Patentinhaber: Zunhammer, Sebastian, 83301 Traunreut (DE)
(72) Erfinder: Zunhammer, Sebastian, 83301 Traunreut (DE); Bogala, Andreas, 51067 Köln (DE); Grüter, Johannes, 49744 Groß Hesepe (DE)
(74) Vertreter: Einsiedler, Johannes

(56) Entgegenhaltungen:
- EP-A1- 2 497 658
- DE-A1- 4 001 495
- DE-A1- 4 142 604
- DE-U1-202013 100 364
- US-B1- 6 321 851

## Beschreibung

Die vorliegende Erfindung betrifft ein landwirtschaftliches Fahrzeuggespann umfassend ein Zugfahrzeug mit einem ersten Kupplungsteil und einem oberhalb des Kupplungsteils ausgebildeten Anlenkpunkt und ein Folgefahrzeug mit einem an einer Deichsel ausgebildeten zweiten Kupplungsteil, einem oberhalb des Kupplungsteils ausgebildeten Druckzylinder zur Ausübung einer zur Deichsel axialen Druckkraft, wobei ein Zylinderkolben des Druckzylinders an dem Anlenkpunkt angelenkt ist, und einer Sensoranordnung zur Ermittlung des Knickwinkels zwischen der Längsachse des Zugfahrzeugs und der Längsachse des Folgefahrzeugs.

Landwirtschaftliche Fahrzeuggespanne unterliegen hinsichtlich der Straßen- und der Feldfahrt unterschiedlichen Anforderungen. Zum einen sollten die Gespanne für eine hohe Fahrgeschwindigkeit, und zum anderen für eine hohe Bodenschonung ausgelegt sein. Im Stand der Technik sind verschieden Lösungen bekannt, die jedoch den sich widersprechenden Anforderungen an Fahrsicherheit und Fahrkomfort auf der einen Seite und Bodenschonung und Traktion auf der anderen Seite in der Summe nicht gerecht werden.

Mittels eines sog. Top-Druckzylinders oder hydraulischen Oberlenkers, im Folgenden vereinfacht als Druckzylinder bezeichnet, lassen sich die fahrdynamischen Eigenschaften eines landwirtschaftlichen Fahrzeuggespanns verbessern.

Der Druckzylinder ist in der Regel oberhalb einer Standarddeichselverbindung zwischen einem Zug- und einem Folgefahrzeug angebracht. Durch die von dem Druckzylinder aufgebrachten Druckkräfte werden Zug- und Folgefahrzeug gegeneinander verspannt, was zu einer Gewichtsverlagerung auf die Vorderachse des Zugfahrzeus führt. Neben dem Vorteil der Gewichtsverlagerung auf das Zugfahrzeug verbessert sich das Fahrverhalten. Demgemäß wird durch eine aktive Nickschwingungstilgung bzw. ein vermindertes Aufschaukeln ein komfortables und sicheres Fahren mit hoher Geschwindigkeit auf der Straße möglich; gleichzeitig können bei Feldfahrten Bodenschonung und Traktion erhöht werden. Gegebenenfalls kann auch auf das Frontgewicht bei dem landwirtschaftlichen Gespann verzichtet werden, was die max. zulässige Nutzlast um bis zu 1t erhöhen würde.

Nachteilig an dem Einbau bzw. der Verwendung eines Druckzylinders ist die Querkraft bei Kurvenfahrten und die dadurch fehlende Straßenzulassung, was zur Folge hat, dass ein Einsatz im Straßenverkehr ausscheidet. Bei Kurvenfahrten werden von dem Druckzylinder Querkräfte in das Zugfahrzeug eingebracht, die u.a. die Fahrsicherheit des gesamten landwirtschaftlichen Gespanns gefährden. Ein zwischen Zug- und Folgefahrzeug angebrachter Druckzylinder erzeugt nämlich aufgrund des Knickwinkels zwischen den beiden Fahrzeugen eine Kraftkomponente die mehr oder weniger in Querrichtung auf das Zugfahrzeug wirkt. Diese Kraft verstärkt die Wankbewegung des Zugfahrzeugs zum Kurvenäußeren und sorgt damit für eine weitere Reduzierung der kurveninneren Radlasten und erhöht darüber hinaus die Kippgefahr erheblich. Ein weiteres Problem dieser vom Druckzylinder bei Kurvenfahrten erzeugten Querkraft betrifft die Befestigung des Druckzylinders am Zugfahrzeug. Diese muss für die Aufnahme der Querkräfte vom Zugmaschinenhersteller freigegeben werden.

Aufgabe der Erfindung ist es daher die Fahrsicherheit eines landwirtschaftlichen Fahrzeuggespanns mit einem Zugfahrzeug und einem Folgefahrzeug sowie einem Druckzylinder zu erhöhen.

Gelöst wird die Aufgabe von einem landwirtschaftliche Fahrzeuggespann umfassend ein Zugfahrzeug mit einem ersten Kupplungsteil und einem oberhalb des Kupplungsteils ausgebildeten Anlenkpunkt und ein Folgefahrzeug mit einem an einer Deichsel ausgebildeten zweiten Kupplungsteil, einem oberhalb des Kupplungsteils ausgebildeten Druckzylinder zur Ausübung einer zur Deichsel axialen Druckkraft, wobei ein Zylinderkolben des Druckzylinders an dem Anlenkpunkt angelenkt ist, und einer Sensoranordnung zur Ermittlung des Knickwinkels zwischen der Längsachse des Zugfahrzeugs und der Längsachse des Folgefahrzeugs, das dadurch gekennzeichnet ist, dass die von dem Druckzylinder ausgeübte Druckkraft in Abhängigkeit des mittels der Sensoranordnung ermittelten Knickwinkels zwischen der Längsachse des Zugfahrzeugs und der Längsachse des Folgefahrzeugs gesteuert wird.

Die Erfindung beruht demnach auf dem Gedanken, die von dem Druckzylinder ausgeübte Druckkraft in Abhängigkeit des Knickwinkels zwischen der Längsachse des Zugfahrzeugs und der Längsachse des Folgefahrzeugs zu steuern, und wendet sich damit ab von einer reinen On-Off Verwendung, d.h. einer lediglich aktiven (an im Gelände) bzw. passiven (aus im Straßenbetrieb) manuellen Verwendung eines Druckzylinders.

Erfindungsgemäß wird von dem Druckzylinder auf einer Geradeausfahrt auf einer Straße eine hohe Druckkraft aufgebracht. Dies hat den Vorteil, dass die zur Fahrsicherheit, insbesondere im Hinblick auf Lenksicherheit und Nickschwingungstilgung, nötige Mindestlast an der Vorderachse des Zugfahrzeugs anliegt, und damit gegebenenfalls auf das Frontgewicht verzichtet werden kann. Bei einer Geradeausfahrt im Gelände dient die vom Druckzylinder aufgebrachte hohe Druckkraft der Traktionsverstärkung und damit der Zugkraft des Zugfahrzeugs.

Sobald die Sensoranordnung einen Knickwinkel zwischen der Längsachse des Zugfahrzeugs und der Längsachse des Folgefahrzeugs sensiert, wird in Abhängigkeit des Winkelmaßes die Druckkraft, gegebenenfalls bis auf null, selbsttätig reduziert. Dies hat den Vorteil, dass sich in einer Kurvenfahrt, sowohl auf der Straße wie auch im Gelände, die Druckkraft die in Querrichtung auf das Zugfahrzeug wirkt reduziert, was zu verminderten Wankbewegungen führt. Die Fahrsicherheit ist dabei, aufgrund der in der Regel geringeren Fahrgeschwindigkeit in einer Kurve dennoch gegeben. Der Fahrzeugführer ist damit von der Überwachung und manuellen Bedienung des Druckzylinders (On-Off Verwendung) befreit, was die Fahrzeugsicherheit zusätzlich erhöht.

In einer Ausführungsform des erfindungsgemäßen Gespanns ist die maximale Druckkraft abhängig von dem Betriebsort (Straße bzw. Gelände) und/oder dem Betriebszustand (beladen oder entladen). Dies hat den Vorteil, dass die Druckkraft bedarfsgerecht eingestellt werden kann. Die Einstellung kann manuell oder selbsttätig erfolgen.

Zusätzlich oder alternativ lässt sich die von dem Druckzylinder ausgeübte Druckkraft zusätzlich manuell steuern. Demgemäß kann ein Fahrzeugführer den Druckzylinder an- und/oder ausschalten, und/oder zu jedem Zeitpunkt die Druckkraft erhöhen oder reduzieren. Dies hat den Vorteil, dass in bestimmten Situationen, beispielsweise beim Beschleunigen auf gerader Straße die Druckkraft auf ein Maximum manuell erhöht, und später, bei konstanter Fahrgeschwindigkeit, reduziert werden kann. Auch im Gelände kann es gegebenenfalls vorteilhaft sein, neben der selbsttätigen Steuerung der Druckkraft über die Sensoranordnung in Abhängigkeit des Knickwinkels, diese auch manuell nachzuregeln, beispielsweise wenn die Achslast des Zugfahrzeugs zur Schlupfvermeidung kurzfristig auf ein Maximum erhöht werden soll.

Die zur Ermittlung des Knickwinkels zwischen der Längsachse des Zugfahrzeugs und der Längsachse des Folgefahrzeugs vorgesehene Sensoranordnung kann jede beliebige Einrichtung sein, beispielsweise eine elektro-hydraulische Zwangslenkungsvorrichtung, die die vorstehend genannte Aufgabe erfüllt. So kann eine Kugelkupplung des landwirtschaftlichen Gespanns mit einem Winkelsensor versehen sein. Die Sensoranordnung kann auch ein Kraftübertragungsmittel aufweisen, das an zwei in horizontaler Richtung zueinander beabstandeten und ortsfesten Befestigungspunkten mit dem Zugfahrzeug verbunden ist, und einen ortsfest mit der Deichsel verbundenen Messpunkt aufweist, an dem mit einer Messvorrichtung eine horizontale Lageveränderung einer Linie zwischen den genannten beabstandeten beiden Befestigungspunkten relativ zur Deichsellängsachse durch eine Auswertung der Bewegung des Kraftübertragungsmittels im Verhältnis zum Messpunkt messbar ist, wobei der Messpunkt abgestützt ist auf einem Lagerpunkt, der zumindest annähernd in der Wankachse der Deichsel angeordnet ist.

In einer bevorzugten Ausführungsform des erfindungsgemäßen landwirtschaftlichen Gespanns wird die Sensoranordnung von einer an dem Kupplungsteil, besonders bevorzugt an dem Kopf einer Kugelkupplung, des Zugfahrzeugs drehfest angeordneten ersten Anlenkeinrichtung, einer an der Deichsel des Folgefahrzeugs angeordneten und mit einem Sensor mittel- oder unmittelbar verbundenen zweiten Anlenkeinrichtung und einem zwischen der ersten Anlenkeinrichtung und der zweiten Anlenkeinrichtung angeordneten Zug- und/oder Schubmittel gebildet. In vorteilhafter Weise wird hierbei der Knickwinkel von einer Sensoranordnung von besonders einfacher Bauweise ermittelt. Zudem haben reine Lenkbewegungen der gelenkten Achse des Zugfahrzeuges im Stillstand keine Auswirkungen auf den Sensor und damit auf die vom Druckzylinder aufgebrachte Druckkraft. Dies ist besonders vorteilhaft, wenn beispielsweise beim Anfahren im Gelände mit eingeschlagener Lenkachse des Zugfahrzeugs eine hohe Traktion benötigt wird.

Die Verbindung der beiden Fahrzeuge durch ein erstes Kupplungsteil und zweites Kupplungsteil kann grundsätzlich durch eine beliebige Art von Kupplung zwischen zwei Fahrzeugen realisiert sein, solange die Bedingung erfüllt wird, dass diese spielfrei ist. Nur durch eine spielfeie Kupplung lässt sich ein hinreichend genaues Signal mittels der bevorzugten Sensoranordnung erhalten.

Durch das angelenkte Zug- und/oder Schubmittel werden Veränderungen des Knickwinkels zwischen Zugfahrzeug und Folgefahrzeug auf den Sensor der Sensoranordnung übertragen. Der Sensor befindet sich dabei vorzugsweise auf der Deichsel und generiert Informationen aus dem Knickwinkel zwischen der Längsachse des Zugfahrzeuges und der Längsachse des Folgefahrzeugs. Diese Informationen werden gegebenenfalls mit Hilfe eines Soll-/Istwert-Vergleichs in an sich bekannter Weise zur Steuerung des Druckzylinders verwendet.

Grundsätzlich kann der Druckzylinder an jedem geeigneten Anlenkpunkt oberhalb des Kupplungsteils des Zugfahrzeugs angelenkt sein. Da jedoch auf diesen Anlenkpunkt große Kräfte einwirken, gegebenenfalls auch Querkräfte, ist der für den Oberlenker vorgesehene Anlenkpunkt am geeignetsten. Zum einen befindet sich dieser Punkt über der Hinterachse und bringt somit für die Wirkung des Druckzylinders Vorteile. Zum anderen ist an jedem Standardzugfahrzeug eine solche Aufnahme vorhanden. Diese ist in der Regel nur für die Aufnahme von hohen Zug- und Druckkräfte konstruiert, da beim Einsatz der Dreipunkthydraulik konstruktionsbedingt nur geringe Querkräften auftreten. Um von dem Zugfahrzeughersteller eine Freigabe für das Befestigen und Betreiben eines Druckzylinders zu bekommen müssen daher einige Vorgaben berücksichtigt werden. In erster Linie, muss sichergestellt werden, dass die eingeleiteten Querkräfte die zulässigen Höchstwerte in keinem Betriebszustand überschreiten, was erfindungsgemäß erreicht wird. Der Druckzylinder ist vorzugsweise oberhalb der Deichsel des Folgefahrzeugs kardanisch, insbesondere durch eine Kardanringaufhängung, gelagert, um Nick- und Seitwärtsbewegungen aufnehmen zu können.

Die Erfindung wird nachfolgend mit Bezug auf die begleitenden Zeichnungen anhand einer besonders bevorzugten Ausführungsform beispielhaft erläutert. Dabei zeigt:
- Fig. 1: eine Prinzipdarstellung der Kennlinie zur Begrenzung der von einem Druckzylinder aufgebrachten Druckkraft in Abhängigkeit des Knickwinkels,
- Fig. 2: eine Ausführungsform eines landwirtschaftlichen Gespanns und
- Fig. 3: eine Ausführungsform einer Sensoranordnung zur Ermittlung des Knickwinkels in einer Draufsicht.

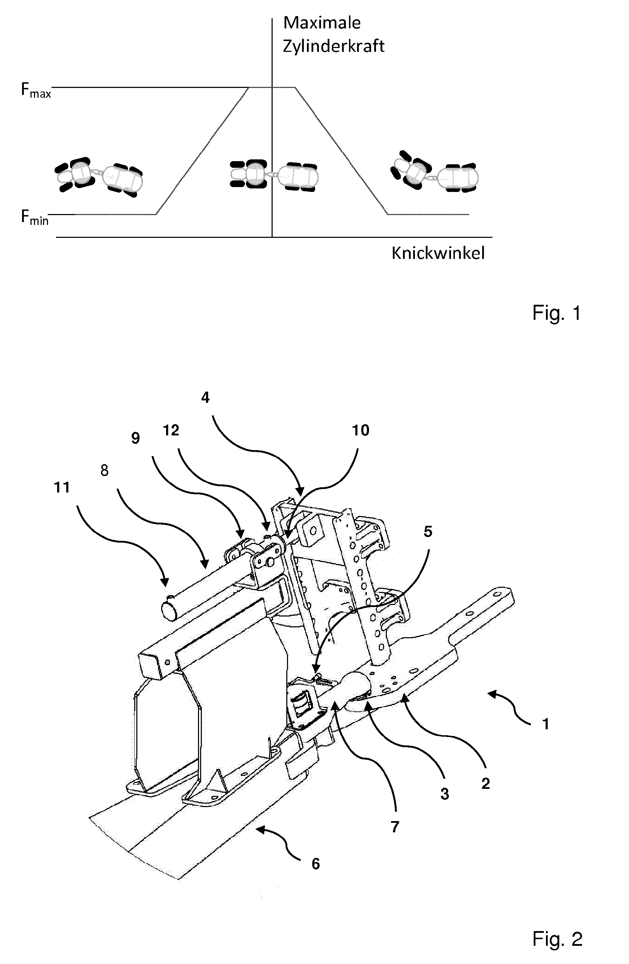

In Figur 1 ist die Kennlinie zur Begrenzung der von einem Druckzylinder aufgebrachten Druckkraft in Abhängigkeit des Knickwinkels zwischen der Längsachse des Zugfahrzeugs und der Längsachse des Folgefahrzeugs dargestellt. Gemäß der Figur wird die vom Druckzylinder aufgebrachte Druckkraft in Abhängigkeit des Knickwinkels reduziert. Dadurch ist es möglich neben der maximalen Längskraft (F_{max.}) ebenfalls die maximale in den Lagerbock eingeleitete Querkraft zu begrenzen.

Figur 2 zeigt die wesentlichen Verbindungsteile eines landwirtschaftlichen Fahrzeuggespanns. Gemäß der Figur weist ein solches Gespann ein Zugfahrzeug mit einem ersten Kupplungsteil 1, das von einer Anhängerdeichsel 2 mit einer Kugelkupplung 3 gebildet wird, und einem oberhalb des Kupplungsteils ausgebildeten Anlenkpunkt 4 für den Oberlenker auf. Zudem ist an der Kugelkupplung 3 eine erste Anlenkeinrichtung 5 drehfest angeordnet.

Ferner weist das Gespann ein Folgefahrzeug mit einem an einer Deichsel 6 ausgebildeten zweiten Kupplungsteil 7 auf. Oberhalb des Kupplungsteils 7 ist ein Druckzylinder 8 mit einer Kardanringaufhängung 9 zur Ausübung einer zur Deichsel 6 axialen Druckkraft angeordnet. Die Druckkraft wird auf den an dem Anlenkpunkt 4 angelenkten Zylinderkolben 10 übertragen. Die Druckkraft des Druckzylinders 8 wird über die Anschlüsse 11, 12 gesteuert. Die Steuerung erfolgt erfindungsgemäß selbsttätig in Abhängigkeit des Knickwinkels und gegebenenfalls manuell durch den Fahrzeugführer.

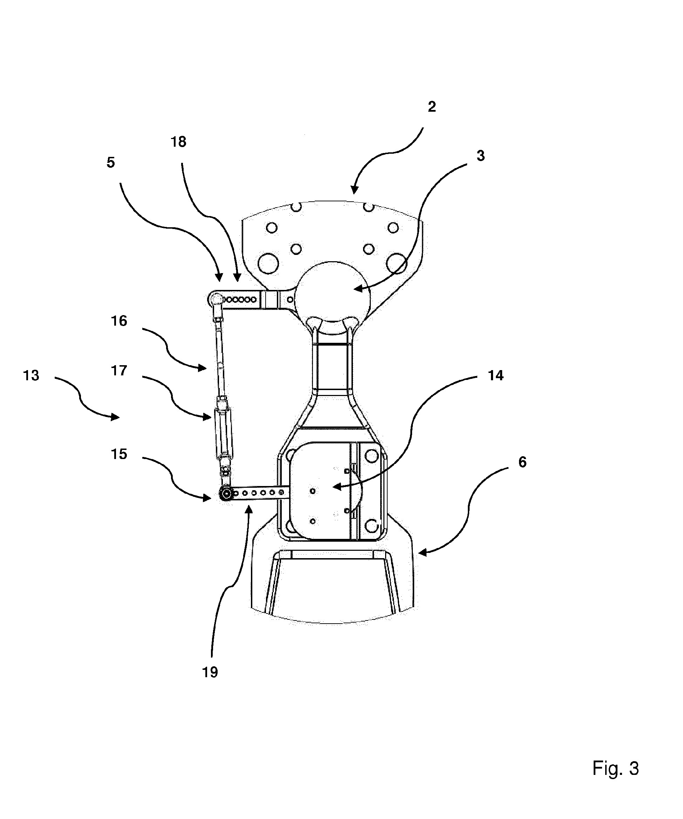

Figur 3 zeigt die zur Steuerung der Druckkraft des Druckzylinders 8 ausgebildete Sensoranordnung 13. Die Anordnung 13 wird von einer an der Kugelkupplung 3 des Zugfahrzeugs drehfest angeordneten ersten Anlenkeinrichtung 5, einer an der Deichsel 6 des Folgefahrzeugs angeordneten und mit einem Sensor 14 mittel- oder unmittelbar verbundenen zweiten Anlenkeinrichtung 15 und einem zwischen der ersten 5 Anlenkeinrichtung und der zweiten Anlenkeinrichtung 1 angeordneten Zug- und/oder Schubmittel 16 gebildet. Ferner weist die Sensoranordnung Mittel 17, 18, 19 zur Kalibrierung, d.h. Einstellmittel für ein Ausgangswinkelmaß auf. Diese Mittel sind ein Schraubgewinde 17 zur Längenanpassung des Zug- und/oder Schubmittels 15, und Lochleisten oder Langlöcher 18, 19 zur Winkelanpassung des Zug- und/oder Schubmittels 16.

In der in Fig. 3 gezeigten Position des ersten und zweiten Kupplungsteils 1, 7 liegt an einem aktiven Druckzylinder 8 (nicht in der Figur) eine hohe, gegebenenfalls maximale Druckkraft an. Sobald eine Kurvenfahrt eingeleitet wird, wird die zweite Anlenkeinrichtung 14 über das Zug- und/oder Schubmittel 15 gezogen (Rechtskurve) oder geschoben (Linkskurve) was die Druckkraft des Druckzylinders 8 in Abhängigkeit des Knickwinkels reduziert. Diese vom Sensor 14 sensierte Bewegung der zweiten Anlenkeinrichtung wird gegebenenfalls mit Hilfe eines Soll-/Istwert-Vergleichs in an sich bekannter Weise zur Steuerung des Druckzylinders 8 verwendet.

### Bezugszeichenliste

- 1: erstes Kupplungsteil
- 2: Anhängerdeichsel
- 3: Kugelkupplung
- 4: Anlenkpunkt
- 5: erste Anlenkeinrichtung
- 6: Deichsel
- 7: zweites Kupplungsteil
- 8: Druckzylinder
- 9: Kardanringaufhängung
- 10: Zylinderkolben
- 11: Anschluss
- 12: Anschluss
- 13: Sensoranordnung
- 14: Sensor
- 15: zweite Anlenkeinrichtung
- 16: Zug- und/oder Schubmittel
- 17: Mittel zur Längenanpassung
- 18: Mittel zu Winkelanpassung
- 19: Mittel zu Winkelanpassung

## Patentansprüche

1. Landwirtschaftliches Fahrzeuggespann, umfassend ein Zugfahrzeug mit einem ersten Kupplungsteil (1) und einem oberhalb des Kupplungsteils (1) ausgebildeten Anlenkpunkt (4) und ein Folgefahrzeug mit einem an einer Deichsel (6) ausgebildeten zweiten Kupplungsteil (7), einem oberhalb des Kupplungsteils (7) ausgebildeten Druckzylinder (8) zur Ausübung einer zur Deichsel (6) axialen Druckkraft, wobei ein Zylinderkolben (10) des Druckzylinders (8) an dem Anlenkpunkt (4) angelenkt ist, und eine Sensoranordnung (13) zur Ermittlung des Knickwinkels zwischen der Längsachse des Zugfahrzeugs und der Längsachse des Folgefahrzeugs, **dadurch gekennzeichnet, dass** die von dem Druckzylinder (8) ausgeübte Druckkraft in Abhängigkeit des mittels der Sensoranordnung (13) ermittelten Knickwinkels zwischen der Längsachse des Zugfahrzeugs und der Längsachse des Folgefahrzeugs gesteuert wird.

2. Landwirtschaftliches Fahrzeuggespann nach Anspruch 1, **dadurch gekennzeichnet, dass** die maximale Druckkraft von dem Betriebsort und/oder dem Betriebszustand abhängig ist.

3. Landwirtschaftliches Fahrzeuggespann nach Anspruch 1 oder 2, **dadurch gekennzeichnet, dass** der Druckzylinder (8) manuell an- und/oder ausgeschalten, und/oder zu jedem Zeitpunkt die Druckkraft erhöht oder reduziert werden kann.

4. Landwirtschaftliches Fahrzeuggespann nach Anspruch 1, 2 oder 3, **dadurch gekennzeichnet, dass** der Zylinderkolben (10) des Druckzylinders (8) an dem für den Oberlenker vorgesehenen Anlenkpunkt (4) angelenkt ist.

5. Landwirtschaftliches Fahrzeuggespann nach einem der vorstehenden Ansprüche, **dadurch gekennzeichnet, dass** der Druckzylinder (8) oberhalb der Deichsel (6) des Folgefahrzeugs kardanisch, insbesondere mittels einer Kardanringaufhängung (9) angeordnet ist.

6. Landwirtschaftliches Fahrzeuggespann nach einem der vorstehenden Ansprüche, **dadurch gekennzeichnet, dass** die Sensoranordnung (13) von einer an dem ersten Kupplungsteil (1) drehfest angeordneten ersten Anlenkeinrichtung (5), einer an der Deichsel (6) angeordneten und mit einem Sensor (14) mittel- oder unmittelbar verbundenen zweiten Anlenkeinrichtung (15) und einem zwischen der ersten Anlenkeinrichtung (5) und der zweiten Anlenkeinrichtung (15) angeordneten Zug- und/oder Schubmittel (16) gebildet wird, und dass die beiden Kupplungsteile 1, 7 formschlüssig und spielfrei ineinandergreifen.

7. Landwirtschaftliches Fahrzeuggespann nach einem der vorstehenden Ansprüche, **dadurch gekennzeichnet, dass** das erste Kupplungsteil (1) der Kopf (3) und das zweite Kupplungsteil (7) das korrespondierende Gegenstück einer Kugelkupplung ist.

8. Landwirtschaftliches Fahrzeuggespann nach Anspruch 6 oder 7, **dadurch gekennzeichnet, dass** die ersten Anlenkeinrichtung (5) am Kragen des Kopf (3) des form- und/oder kraftschlüssig, insbesondere mittels einer Schraubverbindung, befestigbar ist.

9. Landwirtschaftliches Fahrzeuggespann nach einem der Ansprüche 6 bis 8, **dadurch gekennzeichnet, dass** die Sensoranordnung (13) Mittel (17, 18, 19) zur Kalibrierung aufweist.

## Claims

1. Agricultural vehicle-and-trailer combination, comprising a towing vehicle having a first coupling part (1) and an articulation point (4) which is formed above the coupling part (1), and comprising a trailing vehicle having a second coupling part (7) which is formed on a drawbar (6), a pressure cylinder (8), which is formed above the coupling part (7), for exerting a pressure force which is axial to the drawbar (6), wherein a cylinder piston (10) of the pressure cylinder (8) is connected in an articulated manner to the articulation point (4), and comprising a sensor arrangement (13) for determining the bending angle between the longitudinal axis of the towing vehicle and the longitudinal axis of the trailing vehicle, **characterized in that** the pressure force which is exerted by the pressure cylinder (8) is controlled depending on the bending angle between the longitudinal axis of the towing vehicle and the longitudinal axis of the trailing vehicle, which bending angle is ascertained by means of the sensor arrangement (13).

2. Agricultural vehicle-and-trailer combination according to Claim 1, **characterized in that** the maximum pressure force is dependent on the site of operation and/or the state of operation.

3. Agricultural vehicle-and-trailer combination according to Claim 1 or 2, **characterized in that** the pressure cylinder (8) can be manually connected and/or disconnected, and/or the pressure force can be increased or reduced at any time.

4. Agricultural vehicle-and-trailer combination according to Claim 1, 2 or 3, **characterized in that** the cylinder piston (10) of the pressure cylinder (8) is connected in an articulated manner to the articulation point (4) which is provided for the upper link.

5. Agricultural vehicle-and-trailer combination according to one of the preceding claims, **characterized in that** the pressure cylinder (8) is arranged above the drawbar (6) of the trailing vehicle in a gimbal-mounted manner, in particular by means of a gimbal suspension (9).

6. Agricultural vehicle-and-trailer combination according to one of the preceding claims, **characterized in that** the sensor arrangement (13) is formed by a first articulation device (5) which is arranged on the first coupling part (1) in a rotationally fixed manner, a second articulation device (15) which is arranged on the drawbar (6) and is indirectly or directly connected to a sensor (14), and a pull and/or push means (16) which is arranged between the first articulation device (5) and the second articulation device (15), and **in that** the two coupling parts (1, 7) engage one into the other in an interlocking manner and without play.

7. Agricultural vehicle-and-trailer combination according to one of the preceding claims, **characterized in that** the first coupling part (1) is the head (3), and the second coupling part (7) is the corresponding mating piece of a ball-type coupling.

8. Agricultural vehicle-and-trailer combination according to Claim 6 or 7, **characterized in that** the first articulation device (5) can be fastened to the collar of the head (3) of the in an interlocking and/or force-fitting manner, in particular by means of a screw connection.

9. Agricultural vehicle-and-trailer combination according to one of Claims 6 to 8, **characterized in that** the sensor arrangement (13) has calibration means (17, 18, 19).

## Revendications

1. Train de véhicule agricole, comprenant un tracteur avec une première partie de couplage (1) et un point d'articulation (4) réalisé au-dessus de la partie de couplage (1) et un véhicule tracté avec une deuxième partie de couplage (7) réalisée au niveau d'une barre de traction (6), avec un cylindre de pression (8) réalisé au-dessus de la partie de couplage (7) pour exercer une force de pression axiale par rapport à la barre de traction (6), un piston de cylindre (10) du cylindre de pression (8) étant articulé au niveau du point d'articulation (4) et un agencement de capteur (13) pour déterminer l'angle d'inclinaison entre l'axe longitudinal du tracteur et l'axe longitudinal du véhicule tracté, **caractérisé en ce que** la force de pression exercée par le cylindre de pression (8) est commandée en fonction de l'angle d'inclinaison déterminé à l'aide de l'agencement de capteur (13) entre l'axe longitudinal du tracteur et l'axe longitudinal du véhicule tracté.

2. Train de véhicule agricole selon la revendication 1, **caractérisé en ce que** la force de pression maximale dépend du lieu d'exploitation et/ou de l'état de fonctionnement.

3. Train de véhicule agricole selon la revendication 1 ou 2, **caractérisé en ce que** le cylindre de pression (8) est connecté et/ou déconnecté manuellement et/ou qu'à chaque instant, la force de pression peut être augmentée ou réduite.

4. Train de véhicule agricole selon la revendication 1, 2 ou 3, **caractérisé en ce que** le piston de cylindre (10) du cylindre de pression (8) est articulé au niveau du point d'articulation (4) prévu pour la bielle supérieure.

5. Train de véhicule agricole selon l'une quelconque des revendications précédentes, **caractérisé en ce que** le cylindre de pression (8) est disposé au-dessus de la barre de traction (6) du véhicule tracté à la façon d'un cardan, notamment au moyen d'une suspension à cercle de cardan (9).

6. Train de véhicule agricole selon l'une quelconque des revendications précédentes, **caractérisé en ce que** l'agencement de capteur (13) est formé par un premier dispositif d'articulation (5) disposé solidairement en rotation au niveau de la première partie de couplage (1), par un deuxième dispositif d'articulation (15) disposé au niveau de la barre de traction (6) et directement ou indirectement relié à un capteur (14) et par un moyen de traction et/ou de poussée (16) disposé entre le premier dispositif d'articulation (5) et le deuxième dispositif d'articulation (15) et que les deux parties de couplage 1, 7 s'engrènent l'une dans l'autre par complémentarité de formes et sans jeu.

7. Train de véhicule agricole selon l'une quelconque des revendications précédentes, **caractérisé en ce que** la première partie de couplage (1) est la tête (3) et que la deuxième partie de couplage (7) est la contrepièce correspondante d'un couplage sphérique.

8. Train de véhicule agricole selon la revendication 6 ou 7, **caractérisé en ce que** le premier dispositif d'articulation (5) peut être fixé au collet de la tête (3) du par complémentarité de formes et/ou de forces, notamment au moyen d'une liaison vissée.

9. Train de véhicule agricole selon l'une quelconque des revendications 6 à 8, **caractérisé en ce que** l'agencement de capteur (13) comporte des moyens (17, 18, 19) d'étalonnage.
